# EUROPÄISCHE PATENTANMELDUNG

(11) **EP 1 798 892 A1**
(43) Veröffentlichungstag der Anmeldung: **20.06.2007**
(21) Anmeldenummer: 05112400.6
(22) Anmeldetag: 19.12.2005
(51) Int. Cl.: H04L 12/24

(54) **Verfahren zum Laden einer Liste von Alarmen durch eine Alarmapplikation**

(71) Anmelder: SIEMENS AKTIENGESELLSCHAFT, 80333 München (DE)
(72) Erfinder: Schwarzmann, Bernd, 86199, Augsburg (DE)
(74) Vertreter: Berg, Peter

(57) **Zusammenfassung**

Die Erfindung betrifft ein Verfahren zum Laden einer Liste von Alarmen durch eine Alarmapplikation. Von der Alarmapplikation werden von Netzelementen eines Telekommunikationsnetzes gesendete, aktuell offene Alarme gemeinsam mit zugehörigen Alarmattributen dargestellt. Bei der Anforderung der aktuell, offenen Alarme der Netzelemente durch die Alarmapplikation wird nur ein vorgegebener Satz an Alarmattributen zum jeweiligen Alarm angefordert (4) und dann die aktuellen Alarme mit diesen Alarmattributen von den jeweiligen Netzelementen zur Alarmapplikation gesendet (5). Erst nach Anwahl eines bestimmten Alarms (7) werden die noch nicht geladenen zum ausgewählten Alarm gehörenden Alarmattribute vom jeweiligen Netzelement angefordert (82), nachgeladen (92) und dann von der Alarmapplikation angezeigt (102) .

Der Hauptaspekt des erfindungsgemäßen Verfahrens besteht in einer kürzeren Ladezeit für aktuell offene Alarme, die rascher von der Alarmapplikation angezeigt werden, wodurch eine schnellere Rückmeldung über die aktuell offenen Alarme der Netzelemente erhalten wird. Da vorerst nur ein vorgegebener Satz an Alarmattributen mit den Alarmen übertragen wird, wird durch das erfindungsgemäße Verfahren auch zusätzlich die Netzbelastung durch die Übertragung von Alarmdaten zur Alarmapplikation gesenkt.

## Beschreibung

Die Erfindung bezieht sich auf ein Verfahren zum Laden einer Liste von Alarmen durch eine Alarmapplikation.

Ein Telekommunikationsnetz wird definitionsgemäß als Oberbegriff für alle Ressourcen verstanden, durch welche voneinander entfernte Netzzugangspunkte (z.B. Endgeräte) miteinander verbunden werden und von welchen diese Dienste mit Dienstmerkmalen zum Austausch von Informationen sowie zum Übertragen von Daten zur Verfügung gestellt werden.

Ein Telekommunikationsnetz umfasst typischerweise eine Vielzahl an verschiedenen Netzelementen wie beispielsweise Gateways, Vermittlungsstellen bei leitungsgebundenen Telefonnetzen, Switches, Router, Bridges, Hubs, etc. für Computernetze oder so genannte Basisstationen, so genannte Mobile Switching Centers, etc. in Mobilfunknetzen. Diese Netzelemente sind mittels (physikalischer) Verbindung miteinander verbunden. Die Anbindung der Netzzugangspunkte kann entweder leitungsgebunden wie z.B. beim so genannten Festnetz oder bei Computernetzen oder leitungslos wie z.B. beim so genannten Mobilfunknetz oder dem Wireless LAN erfolgen.

Für Verwaltung, Betrieb und Wartung wird in Telekommunikationsnetzen - insbesondere bei großen Telefonnetzen oder Computernetzen - wird ein so genanntes Netzmanagementsystem eingesetzt, durch welches auch Netzelemente und Dienste des Telekommunikationsnetzes gemanagt werden. Netzmanagementsysteme umfassen üblicherweise mehrere Subsysteme, von denen die Aufgaben des Netzmanagementsystems ausgeführt werden - wie beispielsweise Konfigurationsmanagement, durch welches die Planung, Erweiterung oder Veränderung des Layouts des Telekommunikationsnetzes oder der Eigenschaften seiner Netzelemente vorgenommen wird, Sicherheitsmanagement, mit dessen Hilfe Schaden durch unbefugtes Eindringen in das Telekommunikationsnetz (z.B. Manipulation von Daten, unbemerktes Umkonfigurieren, etc.) verhindert werden soll, oder Fehlermanagement, welches auch als Fault-Management bezeichnet wird.

Im Fehlermanagement werden alle Aktivitäten zusammengefasst, welche zur Fehlererkennung und Fehlerbehebung in Telekommunikationsnetzen eingesetzt werden. Das Fehlermanagement umfasst daher einen Satz von Funktionen, um Fehlfunktionen in Telekommunikationsnetzen festzustellen, zu isolieren und zu beheben. Ein Teilbereich des Fehlermanagements, das insbesondere bei der Erkennung von Fehlfunktionen in Telekommunikationsnetzen eingesetzt wird, ist das Management von Alarmen bzw. Alarmmanagement.

Alarme werden von Netzelementen abgesetzt, um eine Fehlfunktion des Netzelements - wie z.B. permanenten oder temporären Ausfall einer Komponente des Netzelements, Ausfall eines auf dem Netzelement laufenden Prozesses, ein auf dem Netzelement laufender Prozess kann nicht gestartet werden, etc.- anzuzeigen. Die in einem Telekommunikationsnetz auftretenden Alarme können durch so genannte Alarmattribute wie beispielsweise Alarmtyp, Fehlerart, Schwierigkeitsgrad (Severity), Zeitpunkt des Alarm-auslösenden Ereignisses (Eventtime), Bearbeitungsstatus, Behebungsart, Alarm-ID, etc. näher beschrieben werden. Beispielsweise wird von der ITU-T Empfehlung X.733 ein Format für Alarme sowie zugehörige Alarmattribute definiert.

Alarme werden dann gemeinsam mit den zugehörigen Alarmattributen mit Hilfe einer so genannten Alarmapplikation verwaltet. Von dieser Alarmapplikation werden üblicherweise Funktionen zur Verfügung gestellt, von welchen das Überwachen und Abfragen von Netzelementen in Bezug auf Alarme und die zugehörigen Alarmattribute ermöglicht wird. Von der Alarmapplikation werden außerdem die Alarme der Netzelemente des Telekommunikationsnetzes gemeinsam mit ihren Alarmattributen z.B. in Form einer Liste und/oder einzeln dargestellt.

Für die Anzeige der Alarme durch die Alarmapplikation werden diese gemeinsam mit den zugehörigen Alarmattributen entweder spontan von den jeweiligen Netzelementen zur Alarmapplikation gesendet oder durch ein so genanntes Re-Alignment von der Alarmapplikation von den Netzelementen angefordert.

Als Re-Alignment wird üblicherweise eine gezielt angestoßene Aufsynchronisierung der Alarmapplikation bezeichnet, wobei von den Netzelementen des Telekommunikationsnetzes die jeweiligen aktuell offenen - d.h. noch nicht von Fehlermanagement-Funktionen erfassten und behandelten - Alarme zusammen mit ihren Alarmattributen angefordert werden. Ein Re-Alignment bzw. die Anforderung der aktuell offenen Alarme aller Netzelemente wird beispielsweise bei einem Neustart der Alarmapplikation oder nach einer so genannten Link-Lost-Situation durchgeführt. Als Link-Lost-Situation wird eine Situation beim Telekommunikationsnetz z.B. dann bezeichnet, wenn die Verbindung zwischen einem oder mehreren Netzelementen des Telekommunikationsnetzes und der Alarmapplikation unterbrochen worden ist.

Nach einem Neustart der Alarmapplikation oder einer Link-Lost-Situation soll der aktuelle Alarmzustand - d.h. alle aktuell offenen Alarme mit zugehörigen Alarmattributen - der Netzelemente im Telekommunikationsnetz möglichst für die Alarmapplikation verfügbar sein und angezeigt werden können, damit die Behandlung von kritischen Fehler in Netzelementen rasch durchgeführt wird. Daher wird üblicherweise sofort bzw. nach einer sehr kurzen Wartezeit ein Re-Alignment-Vorgang durchgeführt, bei dem von allen von der Alarm-applikation überwachten Netzelementen die aktuellen Alarme angefordert werden.

Von einer Alarmapplikation werden üblicherweise oft mehrere Netzelemente überwacht. Außerdem können bei einzelnen Netzelementen sehr viele offene Alarme, welche behandelt werden müssen, auftreten. Daher kann es bei einem Re-Alignment-Vorgang mit unter relativ lange dauern, bis die Alarme der Netzelemente sowie die zugehörigen Alarmattributen für die Alarmapplikation verfügbar sind und von der Alarmapplikation angezeigt werden können. Der Re-Alignment-Vorgang kann beispielsweise einen Zeitraum von mehreren Minuten bis zu einigen Stunden - wie z.B. bei speziellen Netzelementen wie einem Radio Commander eines Mobilfunknetzes - in Anspruch nehmen. Das hat zur Folge, dass z.B. besondere kritische Alarme durch die lange Ladedauer erst verspätet angezeigt und damit behandelt werden können. Außerdem kann die Übertragung vieler Alarme sowie die Übertragung der zugehörigen Alarmattributen zu einer zusätzlichen Belastung des Telekommunikationsnetzes führen.

Daher wird häufig bei Re-Alignment-Vorgängen die Anzahl der von der Alarmapplikation angeforderten Alarme beschränkt. Übliche Kriterien zur Beschränkung sind beispielsweise eine Beschränkung der Anzahl der Alarme (z.B. Anforderung der letzten 500 aktuell offenen Alarme), eine Auswahl nach dem zeitlichen Auftreten der Alarme (z.B. Anzeige nur jener Alarme, die nicht älter als 2 Tage sind) oder Auswahl nach dem Schwierigkeitsgrad (Severity) der Alarme (z.B. Anzeige nur jener Alarme mit einem Schwierigkeitsgrad "kritisch"), etc.

Diese Vorgehensweise, die Anzahl der von der Alarmapplikation angeforderten Alarme zu beschränken, kann allerdings den Nachteil mit sich bringen, dass wichtige bzw. kritische Alarme nicht angefordert werden. Diese Alarme sind dann für die Alarmapplikation nicht verfügbar und werden daher auch nicht angezeigt. Zudem müssen noch technisch aufwendige Behandlungsprozesse für von Netzelementen spontan an die Alarmapplikation gesendete Alarme implementiert werden, wenn die durch einen Re-Alignment-Vorgang von der Alarmapplikation angeforderten Alarme beschränkt werden.

Der vorliegenden Erfindung liegt die Aufgabe zugrunde, ein Verfahren anzugeben, durch welches die zeitliche Dauer von der Anforderung bis zur Anzeige der Alarme durch die Alarmapplikation verkürzt wird, alle aktuellen Alarme der überwachten Netzelemente der Alarmapplikation zur Verfügung gestellt werden und die Belastung des Telekommunikationsnetzes durch die Übertragung der Alarmdaten möglichst gering bleibt.

Die Lösung der Aufgabe erfolgt durch ein Verfahren der eingangs angeführten Art, wobei bei Anforderung der Alarme durch die Alarmapplikation ein vorgegebener Satz an Alarmattributen pro Alarm angefordert wird und dann die von den Netzelementen erzeugten Alarme mit diesen Alarmattributen zur Alarmapplikation gesendet werden. Erst nach Anwahl eines bestimmten Alarms werden die noch nicht geladenen zu diesem Alarm gehörenden Alarmattribute von der Alarmapplikation vom jeweiligen Netzelementes angefordert, nachgeladen und dann angezeigt.

Der Hauptaspekt der erfindungsgemäß vorgeschlagenen Lösung besteht in einer Verkürzung der zeitlichen Dauer des Re-Alignment-Vorganges - d.h. der Anforderung der Alarme von den überwachten Netzelementen durch die Alarmapplikation, wobei trotzdem alle anstehenden Alarme der Netzelemente angezeigt werden. Zusätzlich wird auf vorteilhafte Weise die Belastung des Telekommunikationsnetzes durch die Übertragung der Alarmdaten gering gehalten.

Es ist günstig, wenn nach Anwahl eines bestimmten Alarms alle zu diesem Alarm gehörenden Alarmattribute vom jeweiligen Netzelement angefordert, nachgeladen und angezeigt werden, weil dadurch eventuelle Änderungen von einzelnen Alarmattributen, die sich zwischen dem Re-Alignment-Vorgang und der Auswahl des Alarms ergeben haben können, ebenfalls dargestellt werden.

Es ist vorteilhaft, wenn der vorgegebene Satz an Alarmattributen pro Alarm je nach Netzelement eingestellt werden kann, weil auf diese Weise die für die Auswertung des jeweiligen Alarms bzw. der Alarme des jeweiligen Netzelements sofort beim Re-Alignment-Vorgang z.B. die Behebung oder Behandlung von Alarmen wesentliche und interessante Informationen von der Alarmapplikation angezeigt werden können. Die interessanten und wichtigen Alarmattribute werden dabei vor dem Re-Alignment-Vorgang beispielsweise durch Anwahl der gewünschten Alarmattribute aus allen verfügbaren Alarmattributen ausgewählt.

Bei einer bevorzugten Fortbildung der Erfindung wird bei der Anforderung der Alarme durch die Alarmapplikation der vorgegebene Satz von Alarmattributen pro Alarm von einem Netzelement zurückgesendet und es werden erst mittels eines zusätzlichen Kommandos zusätzliche Alarmattribute vom jeweiligen Netzelement angefordert. Dadurch können zusätzlich zum vorgegebenen Satz an Alarmattributen weitere für beispielsweise die Behebung oder Behandlung von Alarmen wichtige Alarmattribute angefordert und von der Alarmapplikation angezeigt werden.

Es empfiehlt sich, wenn für die Anforderung der Alarme der Netzelemente durch die Alarmapplikation das so genannte Simple Network Management Protocol - SNMP - eingesetzt wird, weil das Simple Network Management Protocol ein definiertes Protokoll darstellt, um Managementinformationen wie z.B. Alarme, welche von Netzelemente bereitgestellt werden, zu lesen und auch zu verändern.

Bei einem bevorzugten Ausführungsbeispiel sind die Alarme gemäß dem in der ITU-T Empfehlung X.733 definierten Format mit den in der ITU-T Empfehlung X.733 definierten Alarmattributen ausgeführt, wodurch auf vorteilhafte Weise von der Alarmapplikation auf ein standardisiertes Alarmformat mit definierten Alarmattributen zugegriffen werden kann.

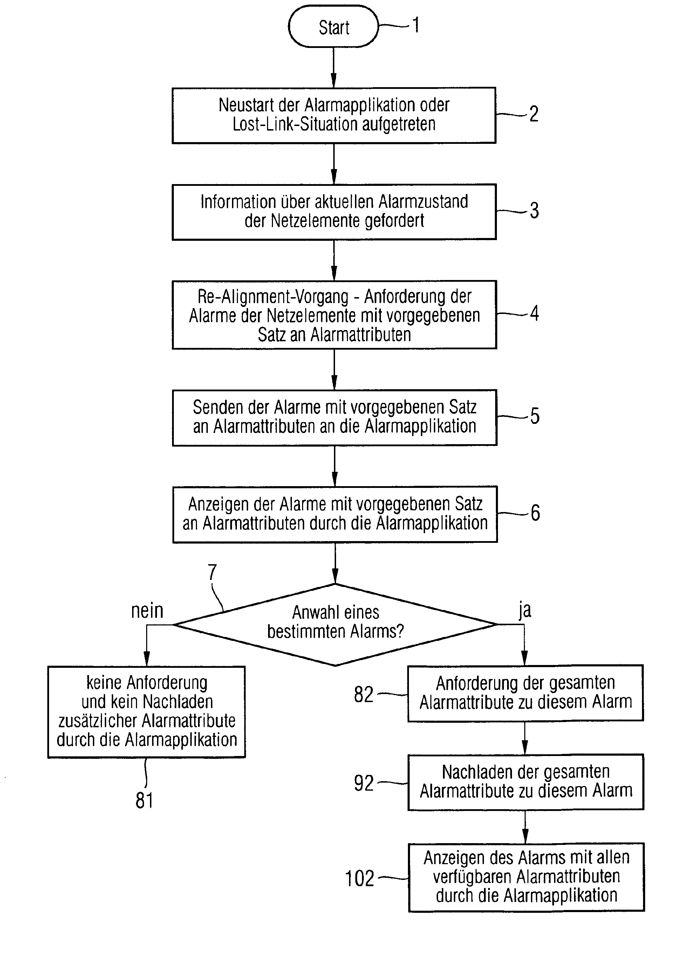

Die Erfindung wird nachfolgend in beispielhafter Weise unter Bezugnahme auf die beigefügte Figur näher erläutert. Es zeigt Figur 1 den schematischen Ablauf des erfindungsgemäßen Verfahrens zum Laden einer Liste von Alarmen durch eine Alarmapplikation.

Nach einem ersten Startschritt 1 wird in einem zweiten Schritt 2 eine Alarmapplikation neu gestartet bzw. es wird festgestellt, dass eine so genannte Lost-Link-Situation aufgetreten ist. Das bedeutet, dass die Verbindung zwischen einer Alarmapplikation und einem oder mehreren Netzelementen eines Telekommunikationsnetzes unterbrochen war und damit die in der Alarmapplikation angezeigten Alarme eventuell nicht mehr dem aktuellen Alarmzustand entsprechen.

Daher wird in einem dritten Schritt 3 erkannt, dass Informationen über den aktuellen Alarmzustand der Netzelemente des Telekommunikationsnetzes notwendig sind, und in einem vierten Schritt 4 ein so genannter Re-Alignment-Vorgang von der Alarmapplikation angestoßen. Es wird also eine gezielte Aufsynchronisierung der Alarmapplikation durchgeführt, bei welcher von der Alarmapplikation die aktuell offenen Alarme der von ihr überwachten Netzelemente des Telekommunikationsnetzes angefordert werden. Dabei wird auch für jeden Alarm ein vorgegebener Satz an Alarmattributen mitangefordert, welcher nur wenige Alarmattribute pro Alarm umfasst.

Der vorgegebene Satz an Alarmattributen wird vor dem Re-Alignment-Vorgang definiert, wobei dieser vorgegebenen Satz beispielsweise ein vordefinierter Standardsatz sein kann, welcher für alle durch die Alarmapplikation angeforderten Alarms gleich ist, oder durch einen Benutzer Netzelement- oder sogar Alarm-spezifisch ausgewählt werden kann. Dabei kann der Benutzer beispielsweise über so genannte Checkboxen in der Alarmapplikation aus allen Alarmattributen jene auswählen, welche für ihn am interessantesten sind. Es ist auch vorstellbar, dass die Auswahl der Alarmattribute automatisch durch die Alarmapplikation durchgeführt wird, wobei dann in Abhängigkeit von den in der Alarmapplikation anzeigbaren Alarmattributen der vorgegebene Satz bestimmt wird.

In einem fünften Schritt 5 werden dann die von der Alarmapplikation angeforderten Alarme gemeinsam mit den wenigen durch den vorgegebenen Satz definierten Alarmattributen von den Netzelementen an die Alarmapplikation gesendet. In einem sechsten Schritt 6 werden dann die aktuell offenen und von den Netzelementen übermittelten Alarme gemeinsam mit den wenigen, vordefinierten Alarmattributen von der Alarmapplikation z.B. in Form einer Liste angezeigt.

Ist nun ein Benutzer an weiteren Details zu einem bestimmten Alarm interessiert, so kann dieser Alarm beispielsweise durch Anwahl mit dem so genannten Cursor in der in der Alarmapplikation angezeigten Liste ausgewählt werden bzw. kann z.B. durch einen so genannten Doppelklick auf den Alarm in der Liste ein eigenen Anzeige für diesem Alarm in der Alarmapplikation geöffnet werden. Daher wird in einem siebenten Schritt 7 geprüft, ob ein bestimmter Alarm ausgewählt wurde.

Wurde kein bestimmter Alarm aus der in der Alarmapplikation angezeigten Alarmliste angewählt, so werden in einem achten Schritt 81 auch keine weiteren, noch nicht geladenen Alarmattribute zu den Alarmen angefordert oder von der Alarmapplikation nachgeladen.

Ist aber ein bestimmter Alarm aus der Alarmliste ausgewählt worden, so werden in einem neunten Schritt 82 die noch nicht geladenen zu diesem Alarm gehörenden Alarmattribute von jenem Netzelement angefordert, von welchem der Alarm abgesetzt worden ist. Alternativ können beispielsweise auch alle zu diesem Alarm gehörenden und verfügbaren Alarmattribute vom entsprechenden Netzelement nachgefordert werden, damit eventuell ein neuer Status eines Alarmattributes aus dem vordefinierten Satz ebenfalls erfasst wird.

In einem zehnten Schritt 92 werden dann die weiteren noch nicht geladenen bzw. alle verfügbaren Alarmattribute von der Alarmapplikation nachgeladen und in einem elften Schritt 102 wird dann der ausgewählte Alarm gemeinsam mit allen verfügbaren Alarmattributen z.B. in einer eigenen Anzeige von der Alarmapplikation dargestellt.

## Patentansprüche

1. Verfahren zum Laden einer Liste von Alarmen durch eine Alarmapplikation, von welcher Alarme von Netzelementen eines Telekommunikationsnetzes gemeinsam mit zugehörigen Alarmattributen dargestellt werden, **dadurch gekennzeichnet, dass** bei Anforderung der Alarme durch die Alarmapplikation ein vorgegebener Satz an Alarmattributen pro Alarm angefordert wird (4), dass dann die von den Netzelementen erzeugten Alarme mit diesen Alarmattributen zur Alarmapplikation gesendet werden (5), dass erst nach Anwahl eines bestimmten Alarms (7) die noch nicht geladenen zu diesem Alarm gehörenden Alarmattribute vom jeweiligen Netzelement angefordert (82), nachgeladen (92) und angezeigt werden (102).

2. Verfahren nach Anspruch 1 **dadurch gekennzeichnet, dass** nach Anwahl eines bestimmten Alarms (7) alle zu diesem Alarm gehörenden Alarmattribute vom jeweiligen Netzelement angefordert (82), nachgeladen (92) und angezeigt werden (102).

3. Verfahren nach Anspruch 1 und 2 **dadurch gekennzeichnet, dass** der vorgegebene Satz an Alarmattributen pro Alarm je nach Netzelement eingestellt werden kann.

4. Verfahren nach Anspruch 1 und 2 **dadurch gekennzeichnet, dass** bei einer Anforderung der Alarme (4) durch die Alarmapplikation der vorgegebene Satz von Alarmattributen pro Alarm von einem Netzelement zurückgesendet wird (5) und dass mittels eines zusätzlichen Kommandos zusätzliche Alarmattribute vom jeweiligen Netzelement angefordert werden (82).

5. Verfahren nach einem der Ansprüche 1 bis 4 **dadurch gekennzeichnet, dass** für die Anforderung der Alarme (4, 82) der Netzelemente durch die Alarmapplikation das so genannte Simple Network Management Protocol - SNMP - eingesetzt wird.

6. Verfahren nach einem der Ansprüche 1 bis 5 **dadurch gekennzeichnet, dass** die Alarme gemäß dem in der ITU-T Empfehlung X.733 definierten Format mit den in der ITU-T Empfehlung X.733 definierten Alarmattributen ausgeführt sind.
